Europäisches Patentamt

(19) European Patent Office

Office européen des brevets

(11) **EP 1 456 426 B1**

(12) **EUROPEAN PATENT SPECIFICATION**

(45) Date of publication and mention
of the grant of the patent:
**01.06.2005 Bulletin 2005/22**

(21) Application number: **02790603.1**

(22) Date of filing: **20.12.2002**

(51) Int Cl.⁷: **C22B 23/00**

(86) International application number:
**PCT/IB2002/005556**

(87) International publication number:
**WO 2003/054238 (03.07.2003 Gazette 2003/27)**

(54) **A METHOD FOR THE RECOVERY OF COBALT**

VERFAHREN ZUR GEWINNUNG VON KOBALT

PROCEDE DE RECUPERATION DE COBALT

(84) Designated Contracting States:
**BE FI FR**

(30) Priority: **21.12.2001 ZA 200110512**

(43) Date of publication of application:
**15.09.2004 Bulletin 2004/38**

(73) Proprietors:
• **Congo Mineral Developments Ltd
Road Town, Tortola (VG)**
• **Anglo Operations Limited
2001 Johannesburg (ZA)**

(72) Inventors:
• **LUNT, David, John
Karrinyup, Western Australia (AU)**
• **PRYOR, Bernard, Robert
Weybridge, Surrey KT13 9NF (GB)**
• **COLETTE, Francois, Ferdinand, Joseph
Principaute de Monaco (MC)**

• **WHYTE, Rodney, Murison
2195 Northcliff (ZA)**
• **MANN, Jeremy, Wilson
2195 Northcliff (ZA)**
• **ALEXANDER, Douglas
1610 Edenvale (ZA)**
• **RAMSAY, Allen, Graham
Midrand (ZA)**
• **CORTES, Gustavo, Adolfo, Tapia
La Reina, Santigo (CL)**

(74) Representative: **Molyneaux, Martyn William
Harrison Goddard Foote
40-43 Chancery Lane
London WC2A 1JA (GB)**

(56) References cited:
**WO-A-00/56943**       **CA-A- 935 650**
**US-A- 3 685 965**      **US-A- 4 029 498**

**Description**

## BACKGROUND OF THE INVENTION

This invention relates to a method for the recovery of cobalt from a solution containing cobalt values, and as the major impurities, iron values, manganese values, aluminium values, zinc values, copper values and magnesium values.

Various methods for the recovery of cobalt values from solutions containing such values are known. An example of one such method is taught in German Patent No 1812332 to Norddeutsche Affinerie.

Another method is taught in WO 00/56943 to Lakefield Research Limited. This patent application teaches a process for selectively and sequentially removing an iron constituent and a manganese constituent from a cobalt-bearing composition by the steps of (a) subjecting the composition to a first oxidation mixture of $SO_2$ and oxygen, at conditions sufficient to oxidise the iron constituent; (b) hydrolysing the iron constituent; (c) subjecting the composition to a second oxidation mixture of $SO_2$ and oxygen at conditions sufficient to oxidise the manganese constituent; (d) hydrolysing the manganese constituent; (e) wherein in steps (a) and (b) the composition is maintained at a pH sufficient to precipitate iron while minimising precipitation of manganese or cobalt, and (f) wherein in steps (c) and (d) the composition is maintained at a pH sufficient to precipitate manganese while minimising precipitation of cobalt.

In the specification of the patent application it is stated that the process isolates, in one embodiment manganese selectively from cobalt compositions, and in another embodiment both iron and manganese selectively, that is substantially one at a time, for example with only trace amounts of manganese or cobalt, if any, precipitated with the iron and trace amounts of cobalt, if any, precipitated with the manganese.

However, there is always a need for new methods for the recovery of cobalt values from solution.

## SUMMARY OF THE INVENTION

According to a first aspect of the invention there is provided a method of removing iron and manganese values from a solution containing iron values, manganese values, cobalt values, and optionally other metal values, including the step of:

(1) introducing into the solution a gas mixture of sulphur dioxide and air or sulphur dioxide and oxygen so as in a single step to oxidise the iron values from the ferrous to the ferric state and to oxidise the manganese values from the manganous to the manganic state and then to precipitate the iron values as ferric oxide/hydroxide and to precipitate the manganese values as manganic oxide, leaving the cobalt values in solution,

wherein step (1) is carried out at a temperature of from 20°C to less than 90°C; a pH of from 1.0 to less than 5.0 with a sulphur dioxide concentration in air of up to and including 2.0% or in oxygen of up to and including 9.5%; and a ratio of dissolved sulphur dioxide concentration ($DSO_2$) to dissolved oxygen concentration ($DO_2$) of less than 90:1.

The iron values and the manganese values are precipitated simultaneously, i.e they are precipitated in the same step, without separation of the iron values from the manganese values.

According to a second aspect of the invention there is provided a method of recovering cobalt values from a solution containing cobalt values, iron values, manganese values, aluminium values, zinc values, copper values and magnesium values, including the steps of:

(1) introducing into the solution a gas mixture of sulphur dioxide and air or sulphur dioxide and oxygen so as in a single step to oxidise the iron values from the ferrous to the ferric state and to oxidise the manganese values from the manganous to the manganic state and then to precipitate the iron values as ferric oxide/hydroxide and the manganese values as manganic oxide, leaving the cobalt values in solution;
(2) increasing the pH of the solution of step (1) to a pH of greater than 4.5 to precipitate the aluminium values;
(3) if necessary extracting the zinc values from the solution of step (2) with an organo-phosphorus acid extractant dissolved in an organic solvent, at a pH of less than 3.5;
(4) passing the solution of step (3) over a cationic ion exchange resin to remove the copper and remaining zinc values;
(5) extracting the cobalt values from the solution of step (4) with an organo-phosphorus acid extractant dissolved in an organic solvent, at a pH greater than 5.0; and
(6) recovering the cobalt values from the extractant.

In each step of the method described above, the solution referred to is the solution which remains after removal of the precipitate in the previous step, or after the extraction of metal values in the previous step, or after passage over the ion exchange resin in the previous step.

The conditions of step (1) are preferably those according to the method of the first aspect of the invention.

Step (1) is preferably carried out at a temperature of from 40°C to 50°C inclusive; a pH of from 2.0 to 2.5 inclusive; with a sulphur dioxide concentration in air of from 0.4% to 1.0% inclusive or in oxygen of from 2.0% to 5.0% inclusive; and a ratio $DSO_2:DO_2$ of less than 50:1.

During step (1) the oxidation potential is preferably measured to monitor the course of the oxidation reactions taking place.

In step (2), some of the cobalt values may be precipitated with the aluminium values. These values may be recovered by recycling the precipitate to step

(1). Acid treatment of the precipitate results in redissolution of the cobalt values.

In step (6), the cobalt values may be recovered from the extractant by electro-winning.

## BRIEF DESCRIPTION OF THE DRAWINGS

**Figure 1**    is a block flow diagram of the method of the invention for recovering cobalt values from the solution; and
**Figure 2**    is a block flow diagram of a method of recovering cobalt values from an extractant by electro-winning.

## DESCRIPTION OF EMBODIMENTS

The first aspect of the invention is a method of removing iron and manganese values from a solution containing iron values, manganese values, cobalt values, and optionally other metal values, by introducing into the solution a gas mixture of sulphur dioxide and air or oxygen so as in a single step to oxidise the iron values from the ferrous to the ferric state and to oxidise the manganese values from the manganous to the manganic state and then to precipitate the iron values as ferric oxide/hydroxide and to precipitate the manganese values as manganic oxide, leaving the cobalt values in solution.

This also forms the first step of the second method of the invention for recovering cobalt values from such a solution.

The solution may be for example a leach solution formed as follows.

Processed ore or tailings from a sulphide concentrator may be recovered and subjected to an acid leach (with sulphuric acid) to dissolve the remaining copper and cobalt values. Associated impurities including iron, manganese, aluminium, silica, zinc, magnesium and calcium will also be leached in the process giving a leach liquor. Copper may be recovered from the leach liquor and the resulting leach solution may then be utilised as the starting material for the method of the invention.

A typical leach solution composition is given in Table 1 below:

Table 1

| Solution Analysis | | | | |
|---|---|---|---|---|
| Co,gpl | Cu,mg/l | Fe,mg/l | Mn,mg/l | Al,mg/l |
| 2.0 to 6.0 | <120 | <1500 | <2500 | <1000 |

| Si,mg/l | Zn,mg/l | Mg,mg/l | Ca,mg/l |
|---|---|---|---|
| <500 | <800 | <2500 | <650 |

As stated above, in the first step of the method of the invention, iron and manganese values are removed from the solution by oxidation and precipitation utilising a sulphur dioxide gas in oxygen or in air. The precipitated solids are then separated from the solution and discarded.

The reactions involved in this step may be summarised as follows.

Dispersion/Dissolution of Oxygen and Sulphur Dioxide

$$O_{2(g)} \rightarrow O_{2(aq)} \qquad [1]$$

$$SO_{2(g)} \rightarrow SO_{2(aq)} \qquad [2]$$

$$SO_{2(aq)} + H_2O_{(aq)} \rightarrow SO_2.H_2O_{(aq)} \qquad [3]$$

$$2SO_2 H_2O_{(aq)} + O_{2(aq)} \rightarrow 2H_2SO_{4(aq)} \qquad [4]$$

Iron Oxidation and Precipitation

$$2FeSO_{4(aq)} + O_{2(aq)} + SO_{2(aq)} \rightarrow Fe_2(SO_4)_{3(aq)} \qquad [5]$$

$$Fe_2(SO_4)_{3(aq)} + 6H_2O_{(aq)} \rightarrow 2Fe(OH)_{3(s)} + 3H_2SO_{4(aq)} \qquad [6]$$

Re-Dissolution of Iron

$$Fe(OH)_{3(s)} + 3H_2SO_{4(aq)} \rightarrow Fe_2(SO_4)3_{(aq)} + 6H_2O_{(aq)} \qquad [7]$$

Manganese Oxidation and Precipitation

$$MnSO_{4(aq)} + O_{2(aq)} + SO_{2(aq)} + 2H_2O_{(aq)} \rightarrow MnO_{2(s)} + 2H_2SO_{4(aq)} \qquad [8]$$

$$2MnSO_{4(aq)} + O_{2(aq)} + SO_{2(aq)} + 3H_2O_{(aq)} \rightarrow Mn_2O_{3(s)} + 3H_2SO_{4(aq)} \qquad [9]$$

Re-Dissolution of Manganese

$$MnO_{2(s)} + SO_{2(aq)} \rightarrow MnSO_{4(aq)} \qquad [10]$$

$$2MnO_{2(s)} + 2H_2SO_{4(aq)} \rightarrow 2MnSO_{4(aq)} + 2H_2O_{(aq)} + O_{2(aq)} \qquad [11]$$

$$2Mn_2O_{3(s)} + 4SO_{2(aq)} + O_{2(aq)} \rightarrow 4MnSO_{4(aq)} \qquad [12]$$

$$2Mn_2O_{3(s)} + 4H_2SO_{4(aq)} \rightarrow 4MnSO_{4(aq)} + 4H_2O_{(aq)} + O_{2(aq)} \tag{13}$$

Cobalt Oxidation and Precipitation

$$2CoSO_{4(aq)} + O_{2(aq)} + SO_{2(aq)} + 6H_2O_{(aq)} \rightarrow 2Co(OH)_{3(s)} + 3H_2SO_{4(aq)} \tag{14}$$

The desired reactions are reactions [1], [2], [5], [6], [8] and [9]. The overall objective of step (1) is to promote these reactions at the expense of the remaining reactions.

Thus iron is oxidised from the ferrous to the ferric state (reaction [5]) through the addition of the $SO_2/O_2$ or $SO_2$/air gas mixture.

Manganese is oxidised, by the gas mixture, from the mangenous to the manganic state, and thereafter, the ferric iron and the manganic manganese are precipitated as oxide/hydroxide and oxides respectively (reactions [6], [8] and [9]). In other words the iron and manganese values are removed from the solution containing cobalt values in the same step, without separation of the iron values from the manganese values.

The extent of sulphur dioxide utilisation in these and the competing reactions ([10], [11], [12], [13] and [14]) is dependent primarily on the temperature, the acid concentration or pH, the sulphur dioxide concentration in the oxygen or air gas stream, and the ratio of dissolved sulphur dioxide to dissolved oxygen concentrations ($DSO_2:DO_2$) in the reaction vessel.

Each reaction is affected to a different extent by the variables listed. By setting the temperature and acid conditions, the rate of manganese removal from the solution may be optimised by adjusting the sulphur dioxide concentration in the gas stream, and the gas mixture flow rate to the reaction vessel, to maintain the $DSO_2:DO_2$ in the solution in the reaction vessel to below a specified limit.

The effects of temperature, acid level and sulphur dioxide concentration in the oxygen or air gas stream, on the utilisation of sulphur dioxide for manganese oxidation are discussed below.

Temperature

Over the temperature range 20°C to 90°C, at a fixed acid concentration, the utilisation of sulphur dioxide for manganese oxidation (reactions [8] and [9]) increases with increasing temperature. However, increasing temperature has a greater effect on the undesired reactions, specifically the reduction of manganese, (reactions [10] to [13]) such that, at a fixed acid concentration, the net rate of removal of manganese from the solution decreases with increasing temperature, from 1000 ppm per hour at 20°C to zero at 90°C and over.

Acid Concentration

Over the pH range 1.0 to less than 5.0, at a fixed temperature, the utilisation of sulphur dioxide for manganese oxidation (reactions [8] and [9]) increases with decreasing acid concentration. Below a pH of 1.0, manganese removal is negligible as the reactions [11] and [13] dominate. Above a pH of 4.0, the maximum manganese removal rate of 1000 ppm per hour may be maintained as the reactions [8] and [9] are favoured.

Sulphur Dioxide Concentration

Under all conditions the oxidation of manganese is not supported for a $DSO_2:DO_2$ greater than 90:1. At $DSO_2:DO_2$ greater than 90:1, reducing conditions prevail, strongly favouring reactions [10] to [13].

This establishes an upper limit for the sulphur dioxide concentration in the $SO_2$/air or $SO_2/O_2$ gas mixture sparged into the reaction vessel, dependent on the concentration of manganese in the solution to be treated. With up to 2.0% sulphur dioxide in air or 9.5% sulphur dioxide in oxygen, at a fixed manganese concentration, the overall utilisation of sulphur dioxide for oxidation of the manganese (reactions [8] and [9]) decreases with increasing concentration of sulphur dioxide in the gas stream. This is as a result of an increase in the $DSO_2:DO_2$ ratio in the solution. Manganese precipitation rates may decrease from 1000 ppm per hour at $DSO_2:DO_2$ levels approaching zero to zero at $DSO_2:DO_2$ levels greater than 90:1.

The $SO_2$/air or $SO_2/O_2$ gas mixture is sparged into the reaction vessel. For the iron oxidation, an oxidation potential of 600 to 650 mV (vs. Ag/AgCl) is expected. This serves as an indication that the oxidation reaction (reaction [5]) is proceeding.

For the manganese oxidation, an oxidation potential of 800 to 1200 mV should be measured. Lower values would indicate that the reaction is not proceeding Higher values may be expected when the oxidation of manganese nears completion and reaction [4] becomes prevalent.

In addition to low removal efficiency of manganese from the solution, over addition of sulphur dioxide may result in the promotion of reaction [14] resulting in cobalt losses from the solution in excess of 5%.

Complete removal of manganese from the solution is not targeted since manganese in an electro-winning unit operation is beneficial for the protection of the anodes. Removal of manganese to below 50 mg/l is targeted.

Complete removal of iron, to less than 1.0 mg/l is targeted.

Cobalt losses are preferably contained to less than 3% of the cobalt contained in the solution fed to step (1).

As indicated above, step (1) is preferably carried out at a temperature of from 40°C to 50°C inclusive and a pH of from 2.0 to 2.5 inclusive.

The second step of the method of the invention is to increase the pH of the solution from step (1) (i.e the solution after removal of the iron and manganese precipitate) to a pH of greater than 4.5 to precipitate the aluminium values.

The reaction is as set out below.

$$Al_2(SO_4)_{3(aq)} + 6H_2O_{(aq)} \rightarrow 2Al(OH)_{3(s)} + 3H_2SO_{4(aq)} \qquad [15]$$

At these pH levels, cobalt may also precipitate

$$CoSO_{4(aq)} + 2H_2O_{(aq)} \rightarrow 2Co(OH)_{2(s)} + H_2SO_{4(aq)} \qquad [16]$$

The cobalt precipitated may be recovered by acid treatment of the precipitate. Excess acid contained in the starting solution may be used for this purpose, the precipitate then being recycled back to step (1).
Removal of aluminium is targeted to a concentration of less than 10 mg/l.

The third step of the method of the invention is to extract the zinc values from the solution of step (2) (i.e the solution after removal of the aluminium values) with an organo-phosphorus acid extractant dissolved in an organic solvent at a pH of less than 3.5. This step is only necessary if the solution contains higher than a predetermined level of zinc values. This step is illustrated below.

$$2R_2POOH_{(org)} + M^{2+} + SO_4{}^{2-} \rightarrow R_2POO.M.R_2POO_{(org)} + 2H^+ + SO_4{}^{2-} \qquad [17]$$

$$2R'_2POOH_{(org)} + M^{2+} + SO_4{}^{2-} \rightarrow R'_2POO.M.R'_2POO_{(org)} + 2H^+ + SO_4{}^{2-} \qquad [18]$$

where: R = 2-ethylhexyl

R'=2,4,4-trimethylpentyl

M = Zn, Co, Cu, Ca, Mn, Fe, Mg

Zinc may be removed quantitatively from the solution at a pH of less than 3.5. Cobalt co-extracted into the organic phase may be recovered by scrubbing the loaded organic phase with a more acidic solution, prior to stripping of the zinc with a concentrated acid solution (pH less than 1.0).

Up to 99% of the zinc contained in the solution is extracted in this step. An excess of organic extractant in the organic solvent is required for this purpose.

An effluent stream containing the zinc stripped from the organic phase may be treated to recover the zinc as a by-product of the method of the invention, by electro-winning or by neutralisation of excess acid in the effluent stream and recovery of the zinc as a carbonate, hydroxide or sulphate compound.

An example of a suitable organo-phosphorus acid extractant is Cyanex 272.

The fourth step of the method of the invention is to pass the solution of step (3) (i.e. the solution after removal of the zinc values) over a cationic ion exchange resin to remove the copper and remaining zinc values.

Preferably, the solution from step (3) is treated at a pH of greater than 2.0 and a temperature of between 20°C and 70°C inclusive through an aminophosphonic cationic ion exchange resin bed. Linear velocities of solution through the resin bed are limited to a maximum of 1.5 cm/s in order to remove copper and zinc to the required concentrations of less than 0.1 mg/l. Effective removal is favoured at lower linear velocities, down to 0.1 cm/s.

The solution effluent produced by the ion exchange operation may be returned to the leach liquor, i.e the liquor from which the copper is recovered prior to production of the leach solution, for recovery of the copper.

The fifth step of the method of the invention is to extract the cobalt values from the solution of step (4) (i.e the solution after removal of the copper and zinc values) with an organo-phosphorus acid extractant dissolved in an organic solvent, at a pH of greater than 5.0. This is illustrated below.

$$2R_2POOH_{(org)}+M^{2+}+SO_4^{2-} \rightarrow R_2POO.M.R_2POO_{(org)}+2H^++SO_4^{2-} \qquad [19]$$

$$2R'_2POOH_{(org)}+M^{2+}+SO_4^{2-} \rightarrow R'_2POO.M.R'_2POO_{(org)}+2H^++SO_4^{2-} \qquad [20]$$

where: R = 2-ethylhexyl
     R' = 2,4,4-trimethylpentyl
     M = Zn,Co,Cu,Ca,Mn,Fe,Mg

Cobalt is extracted quantitatively from the solution at a pH greater than 5.0.

By limiting the volume of the organic extractant contacted with the solution of step (4), co-extraction of magnesium may be controlled. To limit the co-extraction of magnesium and other impurities, the concentration of the organic extractant in the organic solvent is fixed at up to 18% by volume, dependent on the concentration of the cobalt in the solution.

In operation, the flow rate of the organic extractant in the organic solvent to be mixed with the solution is controlled to obtain a magnesium concentration on the loaded organic phase of 400 to 1000 mg/l. Further magnesium may be removed from the loaded organic phase, to below 400 mg/l, by contacting the loaded organic phase with electrolyte from the cobalt electro-winning circuit. Cobalt loaded onto the resulting scrubbed organic phase may then be stripped at a pH less than 2.5, utilising acid generated from the cobalt electro-winning operation.

Again, a suitable organo-phosphorus extractant is Cyanex 272.

The cobalt values may then be recovered from the extractant in any suitable manner.

One suitable manner is to use an electro-winning process. This is described below.

In a cobalt electro-winning circuit, cobalt is recovered from the extractant. A bleed stream is taken from the spent electrolyte discharged from the electro-winning cells to strip cobalt from the scrubbed organic extractant, in a solvent extraction stripped circuit. The resulting advance electrolyte is mixed with the balance of the spent electrolyte and the circulating electrolyte produced, is returned to the electro-winning cells to recover the cobalt stripped from the organic extractant. The concentration of cobalt in the circulating electrolyte is maintained at a concentration greater than 45 gpl. The acid level in the spent electrolyte is maintained at less than 10 gpl sulphuric acid by varying the flow rate of the circulating electrolyte and the rate at which the cobalt is removed from the solution in the electro-winning cells.

The electro-winning cells are operated at a temperature of 50°C to 80°C inclusive.

Manganese remaining in solution after the iron/manganese removal will report to the cobalt electro-winning circuit. This manganese will oxidise on the anodes (reaction [21]), thus forming a protective coating and limiting the deportment of lead into the circulating electrolyte and ultimately into the cobalt metal plated.

$$2MnSO_{4(aq)}+O_{2(aq)}+2H_2O_{(aq)} \rightarrow 2MnO_{2(s)}+2H_2SO_{4(aq)}$$

Standard conditions for the electro-winning of cobalt from a high acid solution are applied.

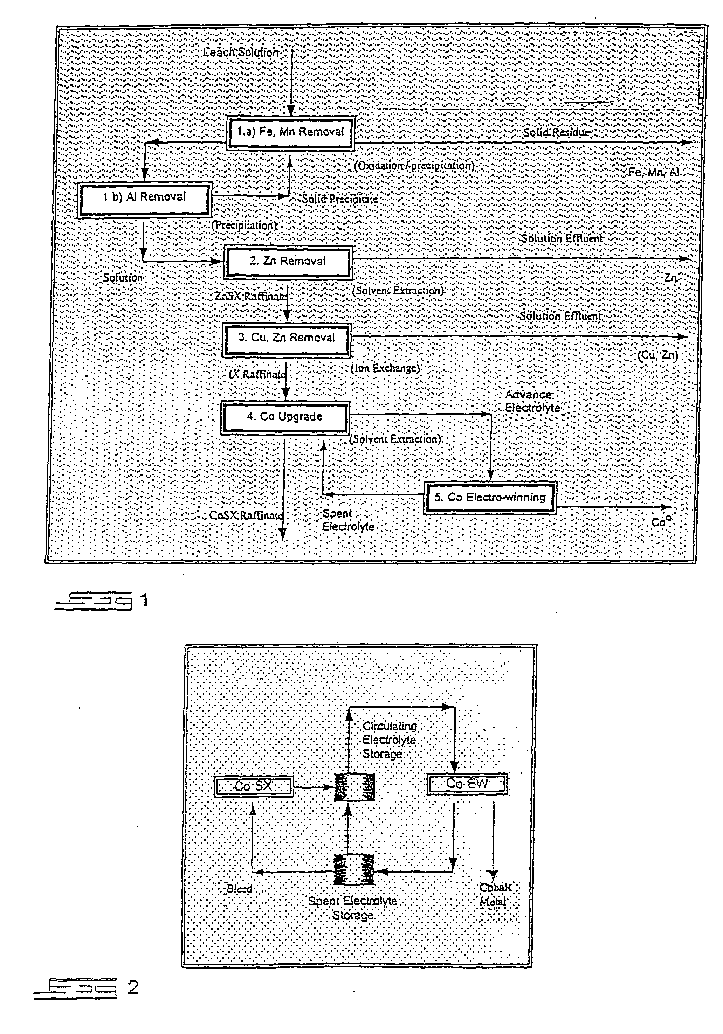

The method of the invention for recovering cobalt values from a solution containing cobalt values and other metal values as described above, is illustrated in Figure 1, while a method for electro-winning of cobalt as described above, is illustrated in Figure 2.

Experimental data illustrating the methods of the invention will now be given.

The performance of the method of the invention for recovering cobalt values from a solution containing cobalt values and other metal of values, demonstrated over a six week pilot trial, is set out below. Average results obtained are set out in Table 2.

Table 2

| Leach Solution Analyses, mg/l | | | | | | | | | |
|---|---|---|---|---|---|---|---|---|---|
| Solution Analysis, mg/l | | | | | | | | | |
| | Co | Cu | Fe | Mn | Al | Si | Zn | Mg | Ca |
| Average | 3329 | 115 | 401 | 1299 | 347 | 309 | 366 | 698 | 511 |
| Maximum | 5731 | 866 | 744 | 2414 | 925 | 487 | 579 | 1118 | 612 |

Steps (1) and (2) Iron/Manganese/Aluminium Removal

Operating Parameters:

| | Fe/Mn Precip. | Al Precip. |
|---|---|---|
| Temperature, °C | 40 - 50 | 40 - 50 |
| Acid Concentration, pH | 2.0 - 2.5 | 5.0 |
| Sulphur Dioxide Concentration in Air, %$SO_2$ | 0.4 - 0.9 | - |
| Dissolved $SO_2$ to Dissolved $O_2$ Ratio, $DSO_2:DO_2$ | <90 | - |

Solution Analyses, mg/l

| | Cobalt | Iron | Manganese | Aluminium |
|---|---|---|---|---|
| Leach Solution . | 3422 | 423 | 1337 | 340 |
| Iron/Manganese/Aluminium Free Solution | * | 2 | 80 | 26 |
| Cobalt Loss: 2.8% | | | | |

Step (3): Zinc Removal - Solvent Extraction

| Operating Parameters: | |
|---|---|
| Temperature, °C | 25 - 40 |
| Extract Acid Concentration, pH | 2.9 |
| Extractant | Cyanex 272 |
| Extractant Concentration, %$^v/_v$ | 9.2 |

Solution Analyses, mg/l

| | Cobalt | Zinc |
|---|---|---|
| Solution from step (2) | 2543 | 251 |
| Solution of step (3) | 2330 | 5 |

Step (4): Copper/Zinc Ion Exchange

| Operating Parameters: | |
|---|---|
| Temperature, °C | 30 - 50 |
| Acid Concentration, pH | 4.5 |
| Cationic Resin | Purolite S940 |
| Solution Superficial Linear Velocity, cm/s | 0.53 - 1.15 |

Solution Analyses, mg/l

| | Cobalt | Zinc | Copper |
|---|---|---|---|
| Solution from step (3) | 2300 | 1.7 | 3.4 |
| Solution of step (4) | * | <0.1 | <0.1 |

Step (5): Cobalt Upgrade - Solvent Extraction

| Operating Parameters: | |
|---|---|
| Temperature, °C | 40 |
| Extract Acid Concentration, pH Profile | 5.4 - 5.7 |
| Scrub Acid Concentration, pH | 4.5 |
| Strip Acid Concentration, pH | 2.0 |
| Extractant | Cyanex 272 |
| Extractant Concentration, % $^v/_v$ | 12 |

Solution Analysis, mg/l

| | Cobalt | Magnesium | Manganese |
|---|---|---|---|
| Solution from step (4) | 2 364 | 699 | 27 |
| Solution of step (5) | 27 | 608 | 7 |
| Loaded Organic | 5 028 | 671 | 39 |
| Scrubbed Organic | 5 856 | 191 | 45 |
| Stripped Organic | 19 | 19 | 9 |
| Spent Electrolyte | 44 534 | 2147 | 141 |
| Advance Electrolyte | 46 800 | 2213 | 159 |

Step (6): Cobalt Electro-Winning

Operating Parameters

| Temperature, °C: | 65 |
|---|---|

Solution Analysis, mg/l

| | Cobalt | Mn | Mg | $H_2SO_4$ |
|---|---|---|---|---|
| Advance Electrolyte | 46800 | 159 | 2213 | 2300 |
| Spent Electrolyte | 44534 | 141 | 2147 | 6600 |

**Claims**

1.  A method of removing iron and manganese values from a solution containing iron values, manganese values, cobalt values, and optionally other metal values, including the step of:

    (1) introducing into the solution a gas mixture of sulphur dioxide and air or sulphur dioxide and oxygen so as in a single step to oxidise the iron values from the ferrous to the ferric state and to oxidise the manganese values from the manganous to the manganic state and then to precipitate the iron values as ferric oxide/ hydroxide and to precipitate the manganese values as manganic oxide, leaving the cobalt values in solution,

    wherein step (1) is carried out at a temperature of from 20°C to less than 90°C; a pH of from 1.0 to less than 5.0 with a sulphur dioxide concentration in air of up to and including 2.0% or in oxygen of up to and including 9.5%; and a ratio of dissolved sulphur dioxide concentration ($DSO_2$) to dissolved oxygen concentration ($DO_2$) of less than 90:1.

2.  The method of claim 1 wherein step (1) is carried out at a temperature of from 40°C to 50°C inclusive.

3.  The method of claim 1 or 2 wherein step (1) is carried out at a pH of from 2.0 to 2.5 inclusive.

4.  The method of any one of the preceding claims wherein step (1) is carried out with a sulphur dioxide concentration in air of from 0.4% to 1.0% inclusive or in oxygen of from 2.5% to 5.0% inclusive; and a ratio $DSO_2:DO_2$ of less than 50:1.

5.  The method of any one of the preceding claims wherein, during step (1), the oxidation potential is measured to monitor the course of the oxidation reactions taking place.

6.  A method of recovering cobalt values from a solution containing cobalt values, iron values, manganese values, aluminium values, zinc values, copper values and magnesium values, including the steps of:

    (1) introducing into the solution a gas mixture of sulphur dioxide and air or sulphur dioxide and oxygen so as in a single step to oxidise the iron values from the ferrous to the ferric state and to oxidise the manganese values from the manganous to the manganic state and then to precipitate the iron values as ferric oxide/ hydroxide and the manganese values as manganic oxide, leaving the cobalt values in solution;
    (2) increasing the pH of the solution of step (1) to a pH of greater than 4.5 to precipitate the aluminium values;
    (3) if necessary extracting the zinc values from the solution of step (2) with an organo-phosphorus acid extractant dissolved in an organic solvent, at a pH of less than 3.5;
    (4) passing the solution of step (3) over a cationic ion exchange resin to remove the copper and remaining zinc values;

(5) extracting the cobalt values from the solution of step (4) with an organo-phosphorus acid extractant dissolved in an organic solvent, at a pH greater than 5.0; and
(6) recovering the cobalt values from the extractant.

**7.** The method of claim 6 wherein step (1) is carried out at a temperature of from 20°C to less than 90°C; a pH of from 1.0 to less than 5.0 with a sulphur dioxide concentration in air of up to and including 2.0% or in oxygen of up to and including 9.5%; and a ratio of dissolved sulphur dioxide concentration ($DSO_2$) to dissolved oxygen concentration ($DO_2$) of less than 90:1.

**8.** The method of claim 6 or 7 wherein step (1) is carried out at a temperature of from 40°C to 50°C inclusive.

**9.** The method of any one of claims 6 to 8 wherein step (1) is carried out at a pH of from 2.0 to 2.5 inclusive.

**10.** The method of any one of claims 6 to 9 wherein step (1) is carried out with a sulphur dioxide concentration in air of from 0.4% to 1.0% inclusive or in oxygen of from 2.0% to 5.0% inclusive; and a ratio $DSO_2:DO_2$ of less than 50:1.

**11.** The method of any one of claims 6 to 10 wherein, during step (1), the oxidation potential is measured to monitor the course of the oxidation reactions taking place.

**12.** The method of any one of claims 6 to 11 wherein precipitate from step (2) is recycled to step (1), to recover cobalt values precipated with the aluminium values.

**13.** The method of any one of claims 6 to 12 wherein, in step (6), the cobalt values are recovered from the extractant by electro-winning.


**Patentansprüche**

**1.** Verfahren zum Entziehen von Eisen- und Manganwerten aus einer Lösung, die Eisenwerte, Manganwerte, Kobaltwerte und optional weitere Metallwerte aufweist, wobei das Verfahren den folgenden Schritt aufweist:

(1) das Einführen einer Gasmischung aus Schwefeldioxid und Luft oder Schwefeldioxid und Sauerstoff in die Lösung, so dass die Eisenwerte in einem Schritt aus dem Eisen(II)- in den Eisen(III)-Zustand oxidiert wird und so dass die Manganwerte aus dem Mangan(II)- in den Mangan(III)-Zustand oxidiert werden, und wobei die Eisenwerte danach als Eisen(III)-Oxid/Hydroxid ausgefällt werden, und wobei die Manganwerte als Mangan(III)-Oxid ausgefällt werden, wobei die Kobaltwerte in der Lösung verbleiben;

wobei der Schritt (1) auf einer Temperatur zwischen 20 °C bis unter 90 °C ausgeführt wird; mit einem pH-Wert von 1,0 bis unter 5,0 mit einer Schwefeldioxidkonzentration in Luft bis zu einschließlich 2,0% oder in Sauerstoff bis zu einschließlich 9,5%; und wobei ein Verhältnis der aufgelösten Schwefeldioxidkonzentration ($DSO_2$) zu der aufgelösten Sauerstoffkonzentration ($DO_2$) weniger als 90:1 beträgt.

**2.** Verfahren nach Anspruch 1, wobei der Schritt (1) auf einer Temperatur zwischen 40 °C und einschließlich 50 °C ausgeführt wird.

**3.** Verfahren nach Anspruch 1 oder 2, wobei der Schritt (1) mit einem pH-Wert von 2,0 bis einschließlich 2,5 ausgeführt wird.

**4.** Verfahren nach einem der vorstehenden Ansprüche, wobei der Schritt (1) mit einer Schwefeldioxidkonzentration in Luft zwischen 0,4% bis einschließlich 1,0% oder in Sauerstoff zwischen 2,5% bis einschließlich 5,0% ausgeführt wird; und mit einem Verhältnis $DSO_2:DO_2$ von unter 50:1.

**5.** Verfahren nach einem der vorstehenden Ansprüche, wobei während dem Schritt (1) das Oxidationspotenzial gemessen wird, um den Verlauf der ausgeführten Oxidationsreaktionen zu überwachen.

**6.** Verfahren zur Rückgewinnung von Kobaltwerten aus einer Lösung, die Kobaltwerte, Eisenwerte, Manganwerte, Aluminiumwerte, Zinkwerte, Kupferwerte und Magnesiumwerte aufweist, wobei das Verfahren die folgenden Schritte aufweist:

(1) das Einführen einer Gasmischung aus Schwefeldioxid und Luft oder Schwefeldioxid und Sauerstoff in die Lösung, so dass die Eisenwerte in einem Schritt aus dem Eisen(II)- in den Eisen(III)-Zustand oxidiert wird und so dass die Manganwerte aus dem Mangan(II)- in den Mangan(III)-Zustand oxidiert werden, und wobei die Eisenwerte danach als Eisen(III)-Oxid/Hydroxid ausgefällt werden, und wobei die Manganwerte als Mangan(III)-Oxid ausgefällt werden, wobei die Kobaltwerte in der Lösung verbleiben;

(2) das Erhöhen des pH-Werts der Lösung aus dem Schritt (1) auf einen pH-Wert, der größer ist als 4,5, um die Aluminiumwerte auszufällen;

(3) das Extrahieren der Zinkwerte aus der Lösung aus Schritt (2) bei Bedarf mit einem phosphorhaltigen organischen Säureextraktionsmittel aufgelöst in einem organischen Lösemittel bei einem pH-Wert von unter 3,5;

(4) das Führen der Lösung aus dem Schritt (3) über ein kationisches Ionenaustauschharz, um die Kupfer- und die verbliebenen Zinkwerte zu entziehen;

(5) das Extrahieren der Kobaltwerte aus der Lösung aus Schritt (4) mit einem in einem organischen Lösemittel aufgelösten phosphorhaltigen organischen Säureextraktionsmittel bei einem pH-Wert von über 5,0; und

(6) die Rückgewinnung der Kobaltwerte aus dem Extraktionsmittel.

**7.** Verfahren nach Anspruch 6, wobei der Schritt (1) auf einer Temperatur zwischen 20 °C und unter 90 °C ausgeführt wird; mit einem pH-Wert zwischen 1,0 bis unter 5,0 bei einer Schwefeldioxidkonzentration in Luft von bis zu einschließlich 2,0% oder in Sauerstoff von bis zu einschließlich 9,5%; und wobei ein Verhältnis der aufgelösten Schwefeldioxidkonzentration ($DSO_2$) zu der aufgelösten Sauerstoffkonzentration ($DO_2$) weniger als 90:1 beträgt.

**8.** Verfahren nach Anspruch 6 oder 7, wobei der Schritt (1) auf einer Temperatur zwischen 40 °C und einschließlich 50 °C ausgeführt wird.

**9.** Verfahren nach einem der Ansprüche 6 bis 8, wobei der Schritt (1) mit einem pH-Wert von 2,0 bis einschließlich 2,5 ausgeführt wird.

**10.** Verfahren nach einem der Ansprüche 6 bis 9, wobei der Schritt (1) mit einer Schwefeldioxidkonzentration in Luft zwischen 0,4% bis einschließlich 1,0% oder in Sauerstoff zwischen 2,5% bis einschließlich 5,0% ausgeführt wird; und mit einem Verhältnis $DSO_2$:$DO_2$ von unter 50:1.

**11.** Verfahren nach einem der Ansprüche 6 bis 10, wobei während dem Schritt (1) das Oxidationspotenzial gemessen wird, um den Verlauf der ausgeführten Oxidationsreaktionen zu überwachen.

**12.** Verfahren nach einem der Ansprüche 6 bis 11, wobei die Ausfällung aus dem Schritt (2) in dem Schritt (1) recycelt wird, um mit den Aluminiumwerten ausgefällte Kobaltwerte wiederzugewinnen.

**13.** Verfahren nach einem der Ansprüche 6 bis 12, wobei in dem Schritt (6) die Kobaltwerte durch elektrolytische Extraktion aus dem Extraktionsmittel zurückgewonnen werden.

## Revendications

**1.** Procédé de retrait de valeurs de fer et de manganèse d'une solution contenant des valeurs de fer, des valeurs de manganèse, des valeurs de cobalt et en option, des valeurs d'autres métaux, comprenant l'étape consistant à :

(1) introduire dans la solution un mélange gazeux de dioxyde de soufre et d'air ou de dioxyde de soufre et d'oxygène de manière à oxyder en une seule étape les valeurs de fer de l'état ferreux à l'état ferrique et à oxyder les valeurs de manganèse de l'état manganeux à l'état manganique et ensuite à précipiter les valeurs de fer en tant qu'oxyde/hydroxyde ferrique et à précipiter les valeurs de manganèse en tant qu'oxyde de manganèse, laissant les valeurs de cobalt dans la solution,

dans lequel l'étape (1) est réalisée à une température allant de 20°C à moins de 90°C ; un pH allant de 1,0 à moins de 5,0 avec une concentration en dioxyde de soufre dans l'air allant jusqu'à 2,0 % inclus ou en oxygène allant jusqu'à 9,5 % inclus ; et un rapport entre la concentration en dioxyde de soufre dissous ($DSO_2$) et la concentration en oxygène dissous ($DO_2$) de moins de 90:1.

**2.** Procédé selon la revendication 1, dans lequel l'étape (1) est réalisée à une température comprise entre 40°C et 50°C inclus.

**3.** Procédé selon la revendication 1 ou 2, dans lequel l'étape (1) est réalisée à un pH compris entre 2,0 et 2,5 inclus.

**4.** Procédé selon l'une quelconque des revendications précédentes, dans lequel l'étape (1) est réalisée avec une concentration en dioxyde de soufre dans l'air comprise entre 0,4 % et 1,0 % inclus ou en oxygène comprise entre 2,5 % et 5,0 % inclus ; et un rapport $DSO_2:DO_2$ de moins de 50:1.

**5.** Procédé selon l'une quelconque des revendications précédentes, dans lequel, au cours de l'étape (1), le potentiel d'oxydation est mesuré pour surveiller le déroulement des réactions d'oxydation ayant lieu.

**6.** Procédé de récupération de valeurs de cobalt d'une solution contenant des valeurs de cobalt, des valeurs de fer, des valeurs de manganèse, des valeurs d'aluminium, des valeurs de zinc, des valeurs de cuivre et des valeurs de magnésium, comprenant les étapes consistant à :

(1) introduire dans la solution un mélange gazeux de dioxyde de soufre et d'air ou de dioxyde de soufre et d'oxygène de manière à oxyder en une seule étape les valeurs de fer de l'état ferreux à l'état ferrique et à oxyder les valeurs de manganèse de l'état manganeux à l'état manganique et ensuite à précipiter les valeurs de fer en tant qu'oxyde/hydroxyde ferrique et les valeurs de manganèse en tant qu'oxyde de manganèse, laissant les valeurs de cobalt dans la solution ;
(2) augmenter le pH de la solution de l'étape (1) à un pH supérieur à 4,5 pour précipiter les valeurs d'aluminium ;
(3) extraire, si nécessaire, les valeurs de zinc de la solution de l'étape (2) avec un solvant d'extraction d'acide organo-phosphoré dissous dans un solvant organique, à un pH de moins de 3,5 ;
(4) faire passer la solution de l'étape (3) sur une résine d'échange d'ions cationiques pour retirer les valeurs de cuivre et les valeurs de zinc résiduelles ;
(5) extraire les valeurs de cobalt de la solution de l'étape (4) avec un solvant d'extraction d'acide organo-phosphoré dissous dans un solvant organique, à un pH supérieur à 5,0 ; et
(6) récupérer les valeurs de cobalt du solvant d'extraction.

**7.** Procédé selon la revendication 6, dans lequel l'étape (1) est réalisée à une température allant de 20°C à moins de 90°C ; un pH allant de 1,0 à moins de 5,0 avec une concentration en dioxyde de soufre dans l'air allant jusqu'à 2,0 % inclus ou en oxygène allant jusqu'à 9,5 % inclus ; et un rapport entre la concentration en dioxyde de soufre dissous ($DSO_2$) et la concentration en oxygène dissous ($DO_2$) de moins de 90:1.

**8.** Procédé selon la revendication 6 ou 7, dans lequel l'étape (1) est réalisée à une température comprise entre 40°C et 50°C inclus.

**9.** Procédé selon l'une quelconque des revendications 6 à 8, dans lequel l'étape (1) est réalisée à un pH compris entre 2,0 et 2,5 inclus.

**10.** Procédé selon l'une quelconque des revendications 6 à 9, dans lequel l'étape (1) est réalisée avec une concentration en dioxyde de soufre dans l'air comprise entre 0,4 % et 1,0 % inclus ou en oxygène comprise entre 2,0% et 5,0 % inclus ; et un rapport $DSO_2:DO_2$ de moins de 50:1.

**11.** Procédé selon l'une quelconque des revendications 6 à 10, dans lequel, au cours de l'étape (1), le potentiel d'oxydation est mesuré pour surveiller le déroulement des réactions d'oxydation ayant lieu.

**12.** Procédé selon l'une quelconque des revendications 6 à 11, dans lequel le précipité de l'étape (2) est recyclé à l'étape (1) pour récupérer les valeurs de cobalt précipitées avec les valeurs d'aluminium.

**13.** Procédé selon l'une quelconque des revendications 6 à 12, dans lequel, à l'étape (6), les valeurs de cobalt sont récupérées du solvant d'extraction par électro-obtention.

Fig. 1

Fig. 2